# EUROPEAN PATENT APPLICATION

(11) **EP 4 362 259 A1**
(43) Date of publication of application: **01.05.2024**
(21) Application number: 22275137.2
(22) Date of filing: 25.10.2022
(51) Int. Cl.: H02J 3/00, H02J 13/00

(54) **IMPROVEMENTS IN OR RELATING TO BIPOLE POWER TRANSMISSION NETWORKS**

(71) Applicant: General Electric Technology GmbH, 5400 Baden (CH)
(72) Inventor: Zou,, Li, Stafford ST16 1WS (GB); Barker,, Carl, Stafford ST16 1WS (GB); Adamczyk,, Andrzej, Stafford ST16 1WS (GB)
(74) Representative: Openshaw & Co.

(57) **Abstract**

In the field of bipole power transmission networks there is a need to identify faulty transmission poles.

A bipole power transmission network (10) comprises a first converter station (12) which is positioned in-use remote from a second converter station (14), and has first and second power converters (34, 44). The bipole power transmission network (10) also includes first and second transmission conduits (16, 18) and a return conduit (20) to, in-use, interconnect the first converter station (12) with the second converter station (14) and thereby permit the transfer of power between the first and second converter stations (12, 14). The first transmission conduit (16) extends from the first power converter (34) whereby at least the first power converter (34) and the first transmission (16) conduit together define a first transmission pole (116), and the second transmission conduit (18) extends from the second power converter (44) whereby at least the second power converter (44) and the second transmission conduit (18) together define a second transmission pole (118). Each conduit (16, 18, 20) has a current sensor (54, 56) associated therewith to measure the current flowing therein. The bipole power transmission network (10) additionally includes a controller (62) that is arranged in operative communication with each said current sensor (54, 56) to receive current flow information from each said current sensor (54, 56). The controller (62) is programmed to identify a faulty first or second transmission pole (116, 118) by: interrogating the current flow information received from each current sensor (54, 56) to establish whether the current (I₁₆, I₁₈, I₂₀) flowing in a respective conduit (16, 18, 20) has changed in a first direction or a second direction opposite the first direction; and identifying a faulty first or second transmission pole (116, 118) according to a predefined relationship between the changes in current flow direction in the respective conduits (16, 18, 20).

## Description

This invention relates to a bipole power transmission network and to a method of operating such a network.

In high voltage direct current (HVDC) power transmission networks AC power is typically converted to DC power for transmission via overhead lines, under-sea cables and/or underground cables. This conversion removes the need to compensate for the AC capacitive load effects imposed by the power transmission medium, i.e. the transmission line or cable, and reduces the cost per kilometre of the lines and/or cables, and thus becomes cost-effective when power needs to be transmitted over a long distance. DC power can also be transmitted directly from offshore wind parks to onshore AC power transmission networks.

The conversion between DC power and AC power is utilised where it is necessary to interconnect DC and AC networks. In any such power transmission network, converters (i.e. power converters) are required at each interface between AC and DC power to effect the required conversion from AC to DC or from DC to AC.

The choice of the most suitable HVDC power transmission network or scheme depends on the application and scheme features. One type of such a network is a bipole power transmission network.

According to a first aspect of the invention there is provided a bipole power transmission network comprising:
a first converter station positioned in-use remote from a second converter station and having first and second power converters;
first and second transmission conduits and a return conduit to in-use interconnect the first converter station with the second converter station and thereby permit the transfer of power between the first and second converter stations, the first transmission conduit extending from the first power converter whereby at least the first power converter and the first transmission conduit together define a first transmission pole, the second transmission conduit extending from the second power converter whereby at least the second power converter and the second transmission conduit together define a second transmission pole, and each conduit having a current sensor associated therewith to measure the current flowing therein; and
a controller arranged in operative communication with each said current sensor to receive current flow information from each said current sensor, the controller being programmed to identify a faulty first or second transmission pole by:
   interrogating the current flow information received from each current sensor to establish whether the current flowing in a respective conduit has changed in a first direction or a second direction opposite the first direction; and
   identifying a faulty first or second transmission pole according to a predefined relationship between the changes in current flow direction in the respective conduits.

Interrogating the current flow information received from each current sensor in the aforementioned manner, and thereafter identifying a faulty first or second transmission pole according to a predefined relationship between the changes in current flow direction in the respective conduits, allows for the fast identification of a faulty transmission pole, e.g. within only two or less current flow information samples of the fault propagating to a corresponding measurement location, i.e. a respective current sensor.

More particularly, it avoids the reliance on measuring and thereafter utilising the DC voltage of the first and second transmission conduits to try and identify a faulty transmission conduit. Such measuring typically needs a low pass filter, such as a Moving Average Filter, to filter out AC components of the measured voltage and is therefore too slow to coordinate with, e.g. fast-acting protection measures which desirably should be deployed in the event of a faulty transmission pole being identified. Additionally, DC voltage-based methods of detection can, under certain conditions, give an erroneous faulty transmission pole identification.

Additionally, such interrogation of the current flow information is able advantageously to identify the faulty, i.e. unhealthy, transmission pole even when the transmission conduit takes the form of a transmission cable (which may be an underground cable or a subsea cable) or an overhead line.

It is also, beneficially, able to identify the faulty, i.e. unhealthy, transmission pole in the event of a fault arising in a power converter within one or other of the first and second converters stations (on either a DC side or an AC side of such a power converter), or a fault arising in the respective transmission conduit itself (be that a transmission cable or an overhead line).

Moreover, such interrogation steps are scalable beyond a, so-called, "point-to-point" bipole power transmission network having just first and second converter stations interconnected by first and second transmission conduits and a return conduit, to "multi-terminal" bipole power transmission networks having further converter stations and associated interconnecting transmission and return conduits.

In a preferred embodiment of the invention a first predefined relationship between the changes in current flow direction in the respective conduits is the current flowing in each of the second transmission conduit and the return conduit changing in the second direction, the controller identifying a faulty first transmission pole in the event of such a first predefined relationship arising.

In another preferred embodiment of the invention a second predefined relationship between the changes in current flow direction in the respective conduits is the current flowing in each of the first transmission conduit and the return conduit changing in the first direction, the controller identifying a faulty second transmission pole in the event of such a second predefined relationship arising.

Such first and second predefined relationships between the changes in current flow direction in the respective conduits desirably, and unambiguously allow the controller to correctly identify, as the case may be, a faulty first or second transmission pole.

Preferably the controller is additionally programmed only to begin interrogating the current flow information received from each current sensor in the event of a predetermined change in the current flowing in one or other of the first and second transmission conduits.

Such further programming of the controller desirably helps to ensure that identification of a faulty first or second transmission pole only takes place in circumstances where a genuine fault has occurred, e.g. rather than temporary changes in current flow in the first and second conduits which might occur during routine operational changes within the bipole power transmission scheme.

The predetermined change in the current flowing in one or other the first and second transmission conduits may be one or both of:
an increase in the rate of change of current flowing above a pre-set threshold; and
an increase in the absolute magnitude of current flowing above a pre-set threshold.

Specifying the predetermined change in one or both of the foregoing manners advantageously establishes an operational boundary around identification of a faulty first or second transmission pole by the controller in such a manner that it reduces the likelihood of inadvertent identification of such a fault, e.g. during normal operation of the bipole power transmission scheme.

In a bipole power transmission network additionally having an earthed end at one or other of the first and second converter stations, the controller optionally is additionally programmed, when interrogating the current flow information received from the current sensor associated with the return conduit, to consider a sum of current flowing in the return conduit and any ground current flowing at the earthed end, and thereafter is still further additionally programmed to:
identify a faulty first transmission pole when the sum of current flowing in the return conduit and any ground current flowing at the earthed end changes in the second direction; and
identifying a faulty second transmission pole when the sum of current flowing in the return conduit and any ground current flowing at the earthed end changes in the first direction.

Such additional programming of the controller advantageously permits the identification of a faulty first or second transmission pole at an earthed end of a bipole power transmission network, e.g. in circumstances where, in the event of a fault, a vast majority of a resulting fault current flows through an associated grounding path and thus there may not be a sufficient level of current flow in one or more of the transmission conduits or the return conduit alone to allow the identification of a faulty first or second transmission pole according to the above-mentioned predefined relationship between the direction of change of current flow in those conduits.

In another preferred embodiment of the invention the controller is additionally programmed to determine the type of fault identified in a faulty first or second transmission pole by additionally considering the change in current flow direction in the transmission conduit within the faulty first or second transmission pole.

The ability to identify the type of fault is beneficial because it assists in identifying the faulty component within the identified faulty transmission pole, i.e. the faulty power converter or conduit therein, and thus allows for the isolation only of such faulty equipment while the rest of the power transmission network remains in operation.

Optionally,
in the event of a faulty first transmission pole being identified the controller is additionally programmed to determine a forward fault has occurred if the current flowing in the first transmission conduit changes in the first direction, or to determine a reverse fault has occurred if the current flowing in the first transmission conduit changes in the second direction; and
in the event of a faulty second transmission pole being identified the controller is additionally programmed to determine a forward fault has occurred if the current flowing in the second transmission conduit changes in the second direction, or to determine a reverse fault has occurred if the current flowing in the second transmission conduit changes in the first direction.

Consideration of such current flow changes in the transmission conduit within the transmission pole identified as being faulty provides a reliable and repeatable way of identifying the type of fault.

According to a second aspect of the invention there is provided a method of operating a bipole power transmission network comprising a first converter station positioned in-use remote from a second converter station and having first and second power converters, first and second transmission conduits and a return conduit to in-use interconnect the first converter station with the second converter station and thereby permit the transfer of power between the first and second converter stations, the first transmission conduit extending from the first power converter whereby at least the first power converter and the first transmission conduit together define a first transmission pole, the second transmission conduit extending from the second power converter whereby at least the second power converter and the second transmission conduit together define a second transmission pole, and each conduit having a current sensor associated therewith to measure the current flowing therein, and the bipole power transmission network further comprising a controller arranged in operative communication with each said current sensor to receive current flow information from each said current sensor,
the method of the invention comprising the steps of having the controller:
interrogate the current flow information received from each current sensor to establish whether the current flowing in a respective conduit has changed in a first direction or a second direction opposite the first direction; and
identify a faulty first or second transmission pole according to a predefined relationship between the changes in current flow direction in the respective conduits.

The method of the invention shares the benefits of the corresponding features of the bipole power transmission network of the invention.

It will be appreciated that the use of the terms "first" and "second", and the like, in this patent specification is merely intended to help distinguish between similar features (e.g. the first and second transmission conduits, and the first and second converter stations), and is not intended to indicate the relative importance of one feature over another feature, unless otherwise specified.

Within the scope of this application it is expressly intended that the various aspects, embodiments, examples and alternatives set out in the preceding paragraphs, and the claims and/or the following description and drawings, and in particular the individual features thereof, may be taken independently or in any combination. That is, all embodiments and all features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

There now follows a brief description of preferred embodiments of the invention, by way of non-limiting example, with reference being made to the following figures in which:
Figure 1 shows a schematic view of a bipole power transmission network according to a first embodiment of the invention;
Figure 2 shows a first relationship between a direction of change of current flow in respective conduits within the bipole power transmission network shown in Figure 1;
Figure 3 shows a second relationship between a direction of change of current flow in respective conduits within the bipole power transmission network shown in Figure 1; and
Figure 4 shows a change in a sum of current flowing in a return conduit and any ground current flowing at an earthed end of the bipole power transmission network shown in Figure 1.

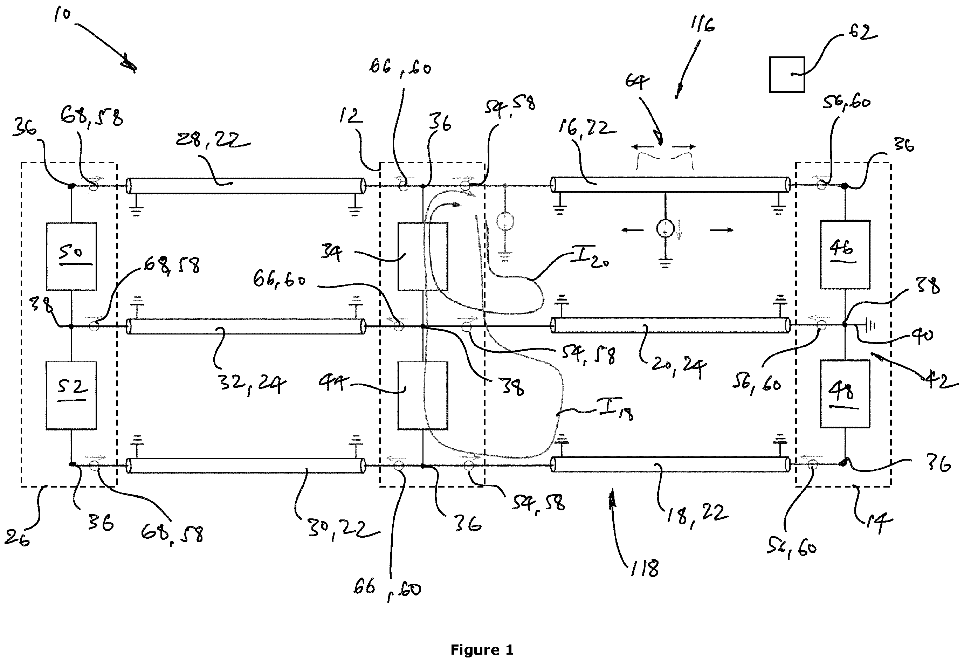

A bipole power transmission network according to a first embodiment of the invention is designated generally by reference numeral 10, as shown in Figure 1.

The bipole power transmission scheme 10 includes a first converter station 12 which is positioned remotely from a second converter station 14.

The first and second converter stations 12, 14 are interconnected by first and second transmission conduits 16, 18 and a first return conduit 20 which permit the transfer of power between the first and second converter stations 12, 14.

Each of the first and second transmission conduits 16, 18 is or includes an overhead line 22, although in other embodiments of the invention one or other transmission conduit might be, or include, an underground or subsea cable, or a mixture of such cables and overhead line.

Meanwhile, the first return conduit 20 is or includes a dedicated metallic return 24, which typically takes the form of a further underground cable, although an electrical conductor of some other form may be used such as an overhead line, as may be ground itself (although this is undesirable for environmental reasons).

The bipole power transmission network 10 shown also includes a third converter station 26 which is connected with the first converter station 12 by third and fourth transmission conduits 28, 30 and a second return conduit 32, which similarly permit the transfer of power between the first and third converter stations 12, 26. Other embodiments of the invention may, however, omit the third converter station and the associated third and fourth transmission conduits and the second return conduit.

Returning to the first embodiment shown, the first converter station 12 includes a first power converter 34 which has a first DC terminal 36 that is connected with the first transmission conduit 16, such that the first transmission conduit 16 extends from the first power converter 34. As such the first power converter 34 and the first transmission conduit 16 could be considered to define a first transmission pole 116. However, the particular embodiment shown includes the second converter station 14 which has a third power converter 46 with a first DC terminal 36 that is also connected with the first transmission conduit 16. In this manner, the first power converter 34, first transmission conduit 16, and the third power converter 46 together define a first transmission pole 116.

The first DC terminal 36 of the first power converter 34 is also connected with the third transmission conduit 28, and the first power converter 34 includes as well as a second DC terminal 38 that is connected with the first and second return conduits 20, 32. The first return conduit 20 is connected to ground 40 to define an earthed end 42 at the second converter station 14.

The first converter station 12 also includes a second power converter 44, which is configured in a similar manner to the first power converter 34. More particularly, the second power converter 44 similarly has first DC terminal 36 that is connected with the second transmission conduit 18, such that the second transmission conduit 18 extends from the second power converter 44 and the second power converter 44 and the second transmission conduit 18 could be considered to define a second transmission pole 118. However, again the particular embodiment shown includes the second converter station 14 which also has a fourth power converter 48 with a first DC terminal 36 that is connected with the second transmission conduit 18. In this manner, the second power converter 44, second transmission conduit 18, and the fourth power converter 48 together define a second transmission pole 118.

The first DC terminal 36 of the second power converter 44 is additionally connected with the fourth transmission conduit 30, while the second power converter 44 also has a second DC terminal 38 which is similarly connected with the first and second return conduits 20, 32.

Meanwhile, in the embodiment shown the third converter station 26 includes fifth and sixth power converters 50, 52, both of which are essentially configured in the same manner as the first and second power converters 34, 44 in the first converter station 12, albeit in a mirror image fashion, i.e. as are the third and fourth power converters 46, 48 in the second converter station 14.

All of the power converters 34, 44, 46, 48, 50, 52 shown is a voltage source converter, although this need not necessarily be the case, and one or more other types of power converter can be used. Voltage source converters have a known configuration that includes a plurality of chain-link converters, each of which is able to provide a stepped variable voltage source that facilitates the aforesaid power transfer between converter stations 12, 14, 26.

In addition to the foregoing the bipole power transmission network 10 shown also includes a controller 62 that is arranged in operative communication (not shown) with each of a series of first current sensors 54. The controller 62 may be located in or adjacent to the first converter station 12, but this need not necessarily be the case, as shown in Figure 1. Meanwhile, in any event each first current sensor 54 is associated with a respective one of the first and second transmission conduits 16, 18 and the first return conduit 20 in order to measure the DC current flowing in the corresponding said conduit 16, 18, 20. In this manner the controller 62 is able to receive current flow information from each first current sensor 54.

In the embodiment shown each first current sensor 54 is located adjacent to a first end 58 of the corresponding conduit 16, 18, 20 although this need not necessarily be the case.

The first current sensors 54 may be any current sensor suitable for deployment in a HVDC power transmission network, such as one of the range of COmpact Sensor Intelligence (COSI) current transformers available from GE Grid Solutions.

The controller 62 is programmed to identify a faulty first or second transmission pole 116, 118, and more particularly is programmed to do so by firstly interrogating the current flow information received from each first current sensor 54 to establish whether the current i flowing in a respective conduit has changed in a first direction or a second direction, opposite the first direction. With respect to the illustrated embodiment shown, the first direction is defined as the direction in which current flows *into* a corresponding conduit 16, 18, 20 and for convenience is thereby considered a "positive" direction, while the second direction is defined as the direction in which current flows *out of* a corresponding conduit 16, 18, 20 and for convenience is thereby considered a "negative" direction. Such definitions are entirely interchangeable however.

Thereafter the controller 62 is programmed to identify a faulty first or second transmission pole 116, 118 according to a predefined relationship between the changes in current flow direction in the respective conduits 16, 18, 20.

More particularly, a first predefined relationship between the changes in current flow direction in the respective conduits 16, 18, 20 is the current flowing in each of the second transmission conduit 18 and the first return conduit 20 changing in the second, i.e. negative, direction.

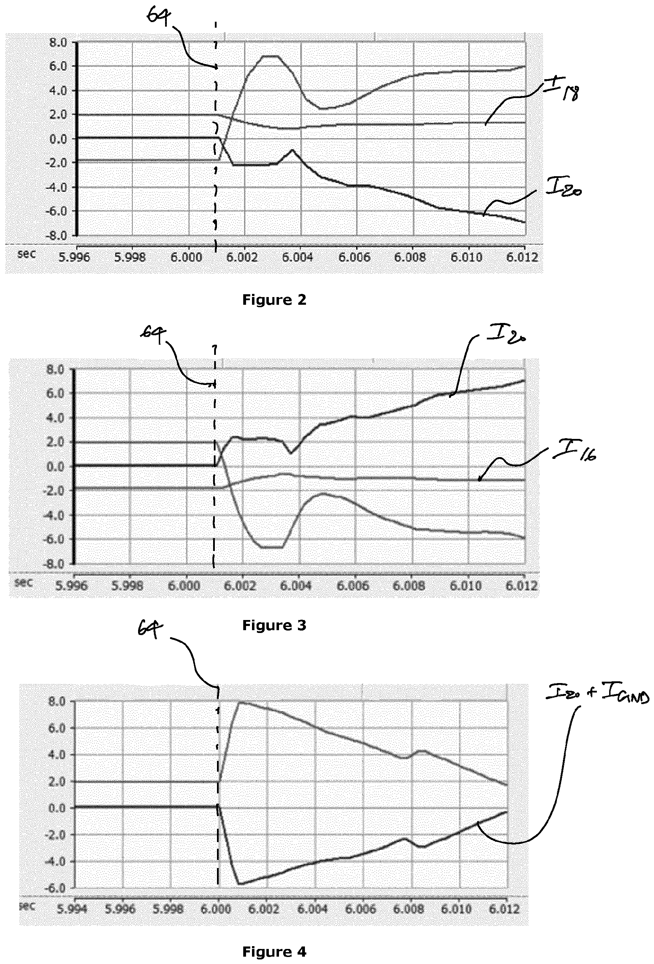

Accordingly, by way of a first example and with referent to Figure 1, in the event of a fault 64, e.g. a ground short circuit, in the first transmission conduit 16 the current I₁₈ flowing in the second transmission conduit 18 changes in the second, negative direction, i.e. changes to flow out of the second transmission conduit 18, as does the current I₂₀ flowing in the first return conduit 20, i.e. as illustrated in Figure 2.

The controller 62 identifies such a faulty first transmission pole 116 in the event of such a first predefined relationship arising.

Meanwhile, a second predefined relationship between the changes in current flow direction in the respective conduits 16, 18, 20 is the current I₁₆ flowing in the first transmission conduit 16 and the current I₂₀ flowing in the first return conduit 20 each changing in the second, positive direction, i.e. each changing to flow into the corresponding conduit 16, 20, as illustrated in Figure 3.

In the event of such a second predefined relationship arising the controller 62 identifies a faulty second transmission pole 118.

In addition to the foregoing, the controller 62 is also programmed only to begin interrogating the current flow information received from each first current sensor 54 in the event of a predetermined change in the current flowing in one or other of the first and second transmission conduits 16, 18.

Such a predetermined change preferably is either an increase in the rate of change of current flowing above a pre-set threshold, or an increase in the absolute magnitude of current flowing above a pre-set threshold.

In any event, the predetermined change is set in a manner such that the controller 62 does not interrogate the current flow information from each first current sensor 54, i.e. with a view to identifying a faulty first or second transmission pole 116, 118, due to normal load fluctuations within the power transmission network 10. For example, the pre-set threshold may be 1.1 PU, i.e. greater than or equal to a 10% change in the normal expected current magnitude in a given transmission conduit 16, 18.

As described above, the bipole power transmission network 10 shown has an earthed end 42 at the second converter station 14. Optionally, therefore, the controller 62 is additionally arranged in operative communication (not shown) with each of a series of second current sensors 56. Each second current sensor 56 is similarly associated with a respective one of the first and second transmission conduits 16, 18 and the first return conduit 20 (to measure the DC current flowing in the corresponding said conduit 16, 18, 20), but is instead located adjacent to a second end 60 of the corresponding conduit 16, 18, 20, although again this need not necessarily be the case. In this manner the controller 62 is similarly able to receive current flow information from each second current sensor 56 and thereby identify a faulty first or second transmission pole 116, 118 by interrogating the said current flow information from the second current sensors 56. In other embodiments of the invention (not shown), the controller may be arranged solely in operative communication with each of the series of second current sensors, and in such other embodiments may be located in or adjacent to the second converter station.

The second current sensors 56 may again be any current sensor suitable for deployment in a HVDC power transmission network.

As a consequence of the foregoing the controller 62 is still further programmed, when interrogating the current flow information received from the second current sensors 56 associated with the first return conduit 20, to consider a sum of current flowing in the first return conduit 120 and any ground current I_{GND} flowing at the earthed end 42.

Thereafter the controller 62 is still further additionally programmed to:
identify a faulty first transmission pole 116 when the sum of current I_{20 +} I_{GND} flowing in the first return conduit 20 and any ground current flowing at the earthed end 42 changes in the second, i.e. negative, direction; and
identify a faulty second transmission pole 118 when the sum of current I_{20 +} I_{GND} flowing in the first return conduit 20 and any ground current flowing at the earthed end 42 changes in the second, i.e. positive, direction.

An example of the sum of current I_{20 +} I_{GND} flowing in the first return conduit 20 and any ground current flowing at the earthed end 42 changing in the second, negative direction, thus leading to the identification by the controller 62 of a faulty first transmission pole 116, is shown in Figure 4.

In still further embodiments of the invention, the controller 62 may be additionally programmed to determine the type of fault identified in a faulty first or second transmission pole 116, 118 by additionally considering the change in current flow direction in the transmission conduit 16, 18 within the faulty first or second transmission pole 116, 118.

More particularly, in the event of a faulty first transmission pole 116 being identified the controller 62 is additionally programmed (i) to determine a forward fault, i.e. a fault somewhere on the conduit side of the sensor in the faulty transmission pole, has occurred, e.g. a first transmission conduit 16 to ground fault or a first transmission pole 116 to return conduit 20 fault, if the current flowing in the first transmission conduit 16 changes in the first, e.g. positive, direction; or (ii) to determine a reverse fault, i.e. a fault somewhere on the side opposite to the conduit side of the sensor in the faulty transmission pole, has occurred, e.g. a fault in one or both of the first and second power converters 34, 44, if the current flowing in the first transmission conduit 16 changes in the second, e.g. negative, direction.

Additionally, in the event of a faulty second transmission pole 118 being identified the controller 62 is additionally programmed (i) to determine a forward fault has occurred if the current flowing in the second transmission conduit 18 changes in the second, negative direction, or (ii) to determine a reverse fault has occurred if the current flowing in the second transmission conduit 18 changes in the first, positive direction.

For example, if the first transmission pole 116 is identified as being faulty, then if the change in current flow direction in the first transmission conduit 16 is in the first, positive direction, e.g. as representative of a ground short circuit in the first transmission conduit 16, a forward fault is determined, or if the change in current flow direction in the first transmission conduit is in the second, negative direction, e.g. as representative of a ground short circuit in the first power converter 34, a reverse fault is determined.

Similarly, if the second transmission pole 118 is identified as being faulty, then if the change in current flow direction in the second transmission conduit 18 is in the first, positive direction, e.g. as representative of a ground short circuit in the second power converter 44, a reverse fault is determined, or if the change in current flow direction in the second transmission conduit 18 is in the second, negative direction, e.g. as representative of a ground short circuit in the second transmission conduit 18, a forward fault is determined.

In addition to the foregoing, other embodiments of the invention (not shown) may instead include a separate, additional controller located in or adjacent to the second converter station which is arranged in operative communication with each of the second current sensors and programmed to identify a faulty first or second transmission pole by interrogating the current flow information received from each of the second current sensors.

In a similar vein, other embodiments of the invention may optionally include a series of third current sensors 66 (shown by way of illustration only in Figure 1), located at a second end 60 of each of the third and fourth transmission conduits 28, 30 and the second return conduit 32, to provide current flow information in those conduits 28, 30, 32, and/or a series of fourth current sensors 68 (shown by way of illustration only in Figure 1), located at a first end 58 of each of the third and fourth transmission conduits 28, 30 and the second return conduit 32, to similarly provide current flow information in those conduits 28, 30, 32.

Moreover, such other embodiments may include a single controller arranged in operative communication with each of the series of current sensors, or separate individual controllers each of which is arranged in operative communication with a single series of current sensors, or some combination of the two, i.e. with one or more individual controllers being in operative communication with two or more series of current sensors.

The latter two embodiments avoid the need for communication between respective ends of a transmission conduit, and so a controller at or adjacent to each end can operate independently to identify a faulty first or second transmission pole according to the transmission and return conduits for which it is able to receive current flow information.

## Claims

1. A bipole power transmission network (10) comprising:
a first converter station (12) positioned in-use remote from a second converter station (14) and having first and second power converters (34, 44);
first and second transmission conduits (16, 18) and a return conduit (20) to in-use interconnect the first converter station (12) with the second converter station (14) and thereby permit the transfer of power between the first and second converter stations (12, 14), the first transmission conduit (16) extending from the first power converter (34) whereby at least the first power converter (34) and the first transmission (16) conduit together define a first transmission pole (116), the second transmission conduit (18) extending from the second power converter (44) whereby at least the second power converter (44) and the second transmission conduit (18) together define a second transmission pole (118), and each conduit (16, 18, 20) having a current sensor (54, 56) associated therewith to measure the current flowing therein; and
a controller (62) arranged in operative communication with each said current sensor (54, 56) to receive current flow information from each said current sensor (54, 56), the controller (62) being programmed to identify a faulty first or second transmission pole (116, 118) by:
interrogating the current flow information received from each current sensor (54, 56) to establish whether the current (I₁₆, I₁₈, I₂₀) flowing in a respective conduit (16, 18, 20) has changed in a first direction or a second direction opposite the first direction; and
identifying a faulty first or second transmission pole (116, 118) according to a predefined relationship between the changes in current flow direction in the respective conduits (16, 18, 20).

2. A bipole power transmission network (10) according to Claim 1 wherein a first predefined relationship between the changes in current flow direction in the respective conduits (16, 18, 20) is the current (I₁₈, I₂₀) flowing in each of the second transmission conduit (18) and the return conduit (18) changing in the second direction, the controller (62) identifying a faulty first transmission pole (116) in the event of such a first predefined relationship arising.

3. A bipole power transmission network (10) according to Claim 1 or Claim 2 wherein a second predefined relationship between the changes in current flow direction in the respective conduits (16, 18, 20) is the current (I₁₆, I₂₀) flowing in each of the first transmission conduit (16) and the return conduit (20) changing in the first direction, the controller identifying a faulty second transmission pole (118) in the event of such a second predefined relationship arising.

4. A bipole power transmission network (10) according to any preceding claim wherein the controller (62) is additionally programmed only to begin interrogating the current flow information received from each current sensor (54, 56) in the event of a predetermined change in the current (I₁₆, I₁₈) flowing in one or other of the first and second transmission conduits (16, 18).

5. A bipole power transmission network (10) according to Claim 4 wherein the predetermined change in the current (I₁₆, I₁₈) flowing in one or other the first and second transmission conduits (16, 18) is one or both of:
an increase in the rate of change of current (I₁₆, I₁₈) flowing above a pre-set threshold; and
an increase in the absolute magnitude of current (I₁₆, I₁₈) flowing above a pre-set threshold.

6. A bipole power transmission network (10) according to any preceding claim additionally having an earthed end (42) at one or other of the first and second converter stations (12, 14), wherein the controller (62) is additionally programmed, when interrogating the current flow information received from the current sensor (54, 56) associated with the return conduit (20), to consider a sum of current (I₂₀) flowing in the return conduit (20) and any ground current (I_{GND}) flowing at the earthed end (42), and thereafter is still further additionally programmed to:
identify a faulty first transmission pole (116) when the sum of current (I₂₀) flowing in the return conduit (20) and any ground current (I_{GND}) flowing at the earthed end (42) changes in the second direction; and
identifying a faulty second transmission pole (118) when the sum of current (120) flowing in the return conduit (20) and any ground current (I_{GND}) flowing at the earthed end (42) changes in the first direction.

7. A bipole power transmission network (10) according to any preceding claim wherein the controller (62) is additionally programmed to determine the type of fault identified in a faulty first or second transmission pole (116, 118) by additionally considering the change in current flow direction in the transmission conduit (16, 18) within the faulty first or second transmission pole (116, 118).

8. A bipole power transmission network (10) according to Claim 7 wherein:
in the event of a faulty first transmission pole (116) being identified the controller (62) is additionally programmed to determine a forward fault has occurred if the current flowing in the first transmission conduit (16) changes in the first direction, or to determine a reverse fault has occurred if the current flowing in the first transmission conduit (16) changes in the second direction; and
in the event of a faulty second transmission pole (118) being identified the controller (62) is additionally programmed to determine a forward fault has occurred if the current flowing in the second transmission conduit (18) changes in the second direction, or to determine a reverse fault has occurred if the current flowing in the second transmission conduit (18) changes in the first direction.

9. A method of operating a bipole power transmission network (10) comprising a first converter station (12) positioned in-use remote from a second converter station (14) and having first and second power converters (34, 44), first and second transmission conduits (16, 18) and a return conduit (20) to in-use interconnect the first converter station (12) with the second converter station (14) and thereby permit the transfer of power between the first and second converter stations (12, 14), the first transmission conduit (16) extending from the first power converter (34) whereby at least the first power converter (34) and the first transmission conduit (16) together define a first transmission pole (116), the second transmission conduit (18) extending from the second power converter (44) whereby at least the second power converter (44) and the second transmission conduit (18) together define a second transmission pole (118), and each conduit (16, 18, 20) having a current sensor (54, 56) associated therewith to measure the current flowing therein, and the bipole power transmission scheme (10) further comprising a controller (62) arranged in operative communication with each said current sensor (54, 56) to receive current flow information from each said current sensor (54, 56),
the method of the invention comprising the steps of having the controller (62):
interrogate the current flow information received from each current sensor (54, 56) to establish whether the current flowing in a respective conduit (16, 18, 20) has changed in a first direction or a second direction opposite the first direction; and
identify a faulty first or second transmission pole (116, 118) according to a predefined relationship between the changes in current flow direction in the respective conduits (16, 18, 20).
